Europäisches Patentamt

European Patent Office

Office européen des brevets

(11) Veröffentlichungsnummer: **0 022 560**
A1

## (12) EUROPÄISCHE PATENTANMELDUNG

(21) Anmeldenummer: 80103939.7

(22) Anmeldetag: 09.07.80

(51) Int. Cl.³: **B 41 J 29/10,** B 41 J 11/08

(30) Priorität: 12.07.79 DE 2928233

(43) Veröffentlichungstag der Anmeldung: 21.01.81
Patentblatt 81/3

(84) Benannte Vertragsstaaten: AT BE CH FR GB IT LI LU NL SE

(71) Anmelder: SIEMENS AKTIENGESELLSCHAFT Berlin und München, Postfach 22 02 61,
D-8000 München 22 (DE)

(72) Erfinder: Reitner, Wilhelm, Platanenstrasse 3,
D-8021 Taufkirchen (DE)

(54) Vorrichtung zur Bedämpfung des von einer Baueinheit eines Gerätes ausgehenden Geräusches.

(57) Eine Baueinheit eines Gerätes, z. B. der Druckbalken eines mechanischen Druckers, wird so bedämpft, daß das von der Baueinheit (10) ausgehende Geräusch weitgehend beseitigt wird. Dazu wird die Baueinheit (10) einerseits zur Verringerung des von ihr ausgehenden Luftschalles mit Dämpfungsgewichten (16) versehen und andererseits zur Verringerung der Körperschallabgabe in einem Dämpfungsblock (22) gelagert, der mit dem Gerätegehäuse (24) verbunden ist. Zwischen Dämpfungsgewicht (16) und Baueinheit (10) kann eine Dämpfungsfolie (18) angeordnet werden. Die Dämpfungsfolie (18) und der Dämpfungsblock (22) können aus Gummi bestehen.

0022560

SIEMENS AKTIENGESELLSCHAFT    Unser Zeichen
BERLIN UND MÜNCHEN    VPA 79 P 2042 EUR

Vorrichtung zur Bedämpfung des von einer Baueinheit
eines Gerätes ausgehenden Geräusches

Die Erfindung bezieht sich auf eine Vorrichtung zur
Bedämpfung des von einer Baueinheit eines Gerätes,
insbesondere eines Druckbalkens eines mechanischen
Druckers ausgehenden Geräusches.

Geräte wie mechanische Drucker, Schreibmaschinen usw.,
die im Bürobetrieb verwendet werden, müssen zur Verringerung der Umweltbelastung lärmbedämpft werden. Dazu werden sie zum Beispiel in lärmbedämpften Gehäusen
angeordnet. Derartige Lösungen sind sehr aufwendig und
sind für Lärmbedämpfung für solche Geräte wenig geeignet, bei denen z.B. Papierblätter oder Papierbahnen
aus dem Gerät herausgeführt werden.

Die der Erfindung zugrundeliegende Aufgabe besteht darin, eine Vorrichtung zur Bedämpfung des von einer Baueinheit eines Gerätes ausgehenden Geräusches mit kosten-

Il 1 Stl / 11.7.79

günstigen Maßnahmen so zu bedämpfen, daß die Geräuschabgabe an die Umwelt nicht mehr belästigend ist. Diese Aufgabe wird dadurch gelöst, daß die Baueinheit einerseits zur Verringerung des von ihr ausgehenden Luftschalles mit mindestens einem Dämpfungsgewicht versehen ist und andererseits zur Verringerung der Körperschallabgabe in mit dem Gerätegehäuse verbundenen Dämpfungsblöcken gelagert ist.

Die Bedämpfung des von der Baueinheit ausgehenden Luftschalles kann verbessert werden, wenn zwischen Dämpfungsgewicht und Baueinheit mindestens eine Dämpfungsfolie angeordnet ist. Diese besteht zweckmäßigerweise aus Gummi. Ebenso können die Dämpfungsblöcke, in denen die Baueinheit gelagert ist, aus Gummi bestehen. Die Härtegrade des Gummi kann bei z.B. 60° Shore liegen. Statt Gummi können auch gummiähnliche Kunststoffe verwendet werden. Das Dämpfungsgewicht ist zweckmäßigerweise aus Metall aufgebaut.

Die Vorteile der erfindungsgemäßen Vorrichtung bestehen darin, daß durch die Anordnung der Dämpfungsgewichte die Luftschallabgabe reduziert wird. Es entsteht gegenüber der Hauptmasse der Baueinheit alleine eine veränderte Eigenresonanz der gesamten Einheit. Die Oberschwingungen werden durch die starke Bedämpfung erheblich reduziert, was sich positiv auf den Lärmeindruck auswirkt. Durch die Lagerung der Baueinheit in dem Dämpfungsblock wird die Körperschallabgabe verringert. Diese Lagerung ermöglicht es, daß die Baueinheit entsprechend ihrer Funktion aufgebaut sein kann und nicht mit Rücksicht auf die Geräuschdämpfung besonders ausgeführt werden muß. Wenn also z.B. die Baueinheit der Druckbalken eines mechanischen Druckers ist, dann kann dieser Druckbalken so hergestellt werden, wie es für den Abdruck der Zeichen auf dem Papier am günstigsten ist, ohne daß Gesichtspunkte der Lärmbedämpfung berücksichtigt werden müssen. Der Druckbalken kann dann aus hartem Material, z.B. Stahl bestehen, er muß nicht wegen der Lärmbedämpfung aus mehreren Schichten aufgebaut werden, wodurch seine Verschleißfreiheit und Steifigkeit vermindert werden würde.

Anhand eines Ausführungsbeispieles, das in den Figuren beschrieben ist, wird die Erfindung weiter erläutert. Dabei wird die Erfindung anhand des Druckbalkens eines mechanischen Druckers beschrieben. Es zeigen:

FIG 1    einen Querschnitt durch den Druckbalken mit Papierumlenk-Körper,

FIG 2    einen Ausschnitt aus der Vorderansicht des Druckbalkens mit Papierumlenk-Körper.

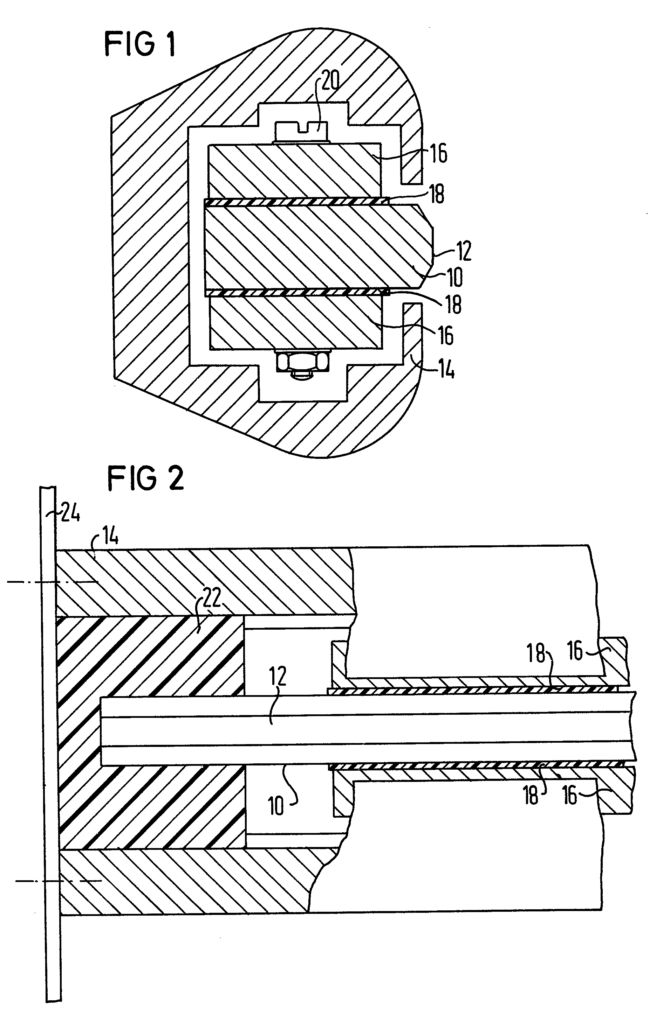

Zur Beschreibung der erfindungsgemäßen Vorrichtung ergibt sich aus den Figuren 1 und 2 als zu bedämpfende Baueinheit ein Druckbalken 10 bei einem mechanischen Drucker, z.B. einem Nadeldrucker. Vor dem Druckbalken 10 wird das zu bedruckende Papier vorbeitransportiert, das zusammen mit einem Farbband durch die Nadeln des Nadeldruckkopfes gegen den Druckbalken 10 geschlagen wird. Dazu ist auf der Vorderseite des Druckbalkens eine Druckfläche 12 vorgesehen. Der Druckbalken 10 ist in einem Papierumlenkkörper 14 angeordnet, mit dessen Hilfe die Papierbahn bzw. die Papierblätter an der Druckfläche 12 des Druckbalkens 10 vorbeigeführt werden. Der sonstige Aufbau des Druckers ist nicht gezeigt, er ergibt sich aus dem Stand der Technik.

Durch das Auftreffen der Drucknadeln auf dem Druckbalken 10 wird dieser in Schwingungen versetzt, durch die die Abgabe des Geräusches verursacht wird. Dabei gibt der Druckbalken 10 einerseits Schall direkt an die Luft ab, andererseits wird der Schall auf das Gehäuse übertragen und von dort an die Luft abgestrahlt. Sowohl die Luftschallabgabe als auch die Körperschallabgabe wird durch die Vorrichtung bedämpft.

Zur Verringerung der Körperschallabgabe werden auf dem Druckbalken 10 Dämpfungsgewichte 16 angeordnet. Zweckmäßigerweise werden dabei zwischen den Dämpfungsgewichten 16 und dem Druckbalken 10 Dämpfungsfolien 18 vorgesehen. Die Dämpfungsfolien können dabei aus Gummi bestehen. Im Ausführungsbeispiel werden die Dämpfungsgewichten 16 mit den Dämpfungsfolien 18 mit Hilfe einer Schraube 20 auf dem Druckbalken 10 befestigt. Die Dämpfungsgewichte können aus demselben Material wie der Druckbalken 10 aufgebaut sein. Sie können zusammen etwa das Gewicht des Druckbalkens 10 haben.

Durch die Anordnung der Dämpfungsgewichte 16 auf dem Druckbalken 10 wird die eigene Resonanz der gesamten Einheit gegenüber der Eigenresonanz des Dämpfungsbalkens 10 verändert. Die Oberschwingungen werden dabei erheblich reduziert.

Zur Verringerung der Körperschallabgabe ist wie FIG 2 zeigt, der Druckbalken 10 auf beiden Seiten in Dämpfungsblöcken 22 gelagert, die jeweils mit einem Gerätegehäuseteil 24 verbunden sind. Der Papierumlenkkörper 14 kann ebenfalls an dem Gerätegehäuseteil 24 befestigt sein. Der Dämpfungsblock 22 besteht zweckmäßigerweise ebenfalls aus Gummi.

Der Dämpfungsblock 22 verhindert den Übergang von Schall vom Druckbalken 10 zum Gerätegehäuseteil 24.

Da der Druckbalken 10 sonst nirgends mit dem Gehäuse Kontakt hat, wird damit der Übergang vom Schall vom Druckbalken 10 auf das Gehäuse weitgehend verhindert. In FIG 2 ist nur die Lagerung des einen Endes des Druckbalkens gezeigt. Die Lagerung des anderen Endes des Druckbalkens erfolgt auf entsprechende Weise.

Das für den Dämpfungsblock 22 und die Dämpfungsfolien 18 verwendete Gummi kann etwa eine Härte von 60° Shore haben. Dann treten trotz der Belastung des Druckbalkens 10 kaum Verschleißerscheinungen bei dem Dämpfungsblock 22 auf.

Da bei der erfindungsgemäßen Vorrichtung die Bedämpfung des Druckbalkens 10 mit Hilfe von Dämpfungsgewichten und durch die Lagerung in Dämpfungsblöcken erfolgt, muß der Druckbalken 10 selbst nicht so aufgebaut werden, daß durch seine Ausführung bereits eine Lärmbedämpfung erreicht wird. Er kann vielmehr so realisiert werden, daß er seine Funktion, nämlich als Gegenlager für die Drucknadeln zu dienen, am besten erfüllt. Das für den Druckbalken verwendete Material kann somit entsprechend der Verschleißfreiheit und Steifigkeit der Druckstelle gewählt werden, ohne daß bei der Auswahl des Materials auf die Lärmbedämpfung Rücksicht genommen werden muß.

4 Patentansprüche
2 Figuren

0022560

Patentansprüche

1. Vorrichtung zur Bedämpfung des von einer Baueinheit eines Gerätes, insbesondere eines Druckbalkens eines Druckers ausgehenden Geräusches, d a d u r c h   g e - k e n n z e i c h n e t , daß die Baueinheit (10) einerseits zur Verringerung des von ihr ausgehenden Luftschalles mit mindestens einem Dämpfungsgewicht (16) versehen ist und andererseits zur Verminderung der Körperschallabgabe in mit dem Gerätegehäuse (24) verbundenen Dämpfungsblöcken (22)  gelagert ist.

2. Vorrichtung nach Anspruch 1, d a d u r c h   g e - k e n n z e i c h n e t , daß zwischen Dämpfungsgewicht (16)  und Baueinheit (10)  mindestens eine Dämpfungsfolie (18) angeordnet ist.

3. Vorrichtung nach Anspruch 1  oder 2, d a d u r c h   g e k e n n z e i c h n e t , daß der Dämpfungsblock (22)  und die Dämpfungsfolie (18)  aus Gummi  oder gummiähnlichem Kunststoff bestehen.

4. Vorrichtung nach einem der vorhergehenden Ansprüche, d a d u r c h   g e k e n n z e i c h n e t , daß das Dämpfungsgewicht (16)  aus Metall besteht.

FIG 1

FIG 2

| | Europäisches Patentamt | **EUROPÄISCHER RECHERCHENBERICHT** | |
|---|---|---|---|

| | **EINSCHLÄGIGE DOKUMENTE** | | | **KLASSIFIKATION DER ANMELDUNG (Int.Cl. 3)** |
|---|---|---|---|---|
| **Kategorie** | **Kennzeichnung des Dokuments mit Angabe, soweit erforderlich, der maßgeblichen Teile** | | **betrifft Anspruch** | |
| A | FR - A - 2 280 511 (N.V. PHILIPS GLOEILAMPENFABRIEKEN) <br> * Insgesamt * | | | B 41 J 29/10 <br> 11/08 |
| A | DE - A - 2 207 931 (OLYMPIA WERKE) <br> * Insgesamt * | | | |
| A | IBM TECHNICAL DISCLOSURE BULLETIN, Band 12, Nr. 3, August 1969, Seite 470 <br> Armonk, U.S.A. <br> R.L. FOWLER: "Typewriter sound reduction" <br> * Insgesamt * | | | **RECHERCHIERTE SACHGEBIETE (Int. Cl. 3)** <br><br> B 41 J |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort: | Abschlußdatum der Recherche | Prüfer |
|---|---|---|
| Den Haag | 16-10-1980 | VAN DEN MEERSCHAUT |

EPA form 1503.1   06.78